# EUROPÄISCHE PATENTSCHRIFT

(11) **EP 0 898 384 B1**
(45) Veröffentlichungstag und Bekanntmachung des Hinweises auf die Patenterteilung: **01.08.2007**
(21) Anmeldenummer: 98115516.1
(22) Anmeldetag: 18.08.1998
(51) Int. Cl.: H04B 7/26

(54) **Verfahren zur Synchronisation von Sende-/Empfangsvorrichtungen bei DECT**
Synchronisation method for DECT sending and receiving device
Procédé de synchronisation pour appareil émetteur récepteur utilisant la norme DECT.

(30) Priorität: 20.08.1997 DE 19736187
(43) Veröffentlichungstag der Anmeldung: 24.02.1999
(73) Patentinhaber: Infineon Technologies AG, 81669 München (DE)
(72) Erfinder: Bötzel, Ulrich, 41564 Kaarst (DE)
(74) Vertreter: Charles, Glyndwr

(56) Entgegenhaltungen:
- EP-A- 0 578 506
- EP-A- 0 788 255
- DE-C- 19 630 048

## Beschreibung

Die Erfindung betrifft ein Verfahren zur Synchronisation von Sende-/Empfangsvorrichtungen bei DECT.

Der DECT-Standard (Digital Enhanced Cortless Telecommunication) beschreibt ein Zeitschlitzverfahren für schnurlose Telekommunikationssysteme auf der Basis einer digitalen Übertragungstechnik. Diese Telekommunikationssysteme verwenden als Zugriff auf das Spektrum ein Time-Devision-Multiple-Access (TDMA)-Verfahren.

Im DECT-TDMA-System mit Full-Slots werden 24 Zeitschlitze (Full-Slots) in einem Zeitbereich von 10 ms mit je 480 Bit untergebracht. Ein Zeitschlitz beinhaltet 424 Datenbits und 56 Bits für die Schutzzeit.

Aus dem Stand der Technik "DECT - ein Standard für schnurlose Telekommunikation", Unterrichtsblätter Jahrgang 48/8/1995, Deutsche Telekom ist die Struktur des DECT-Standards bekannt.

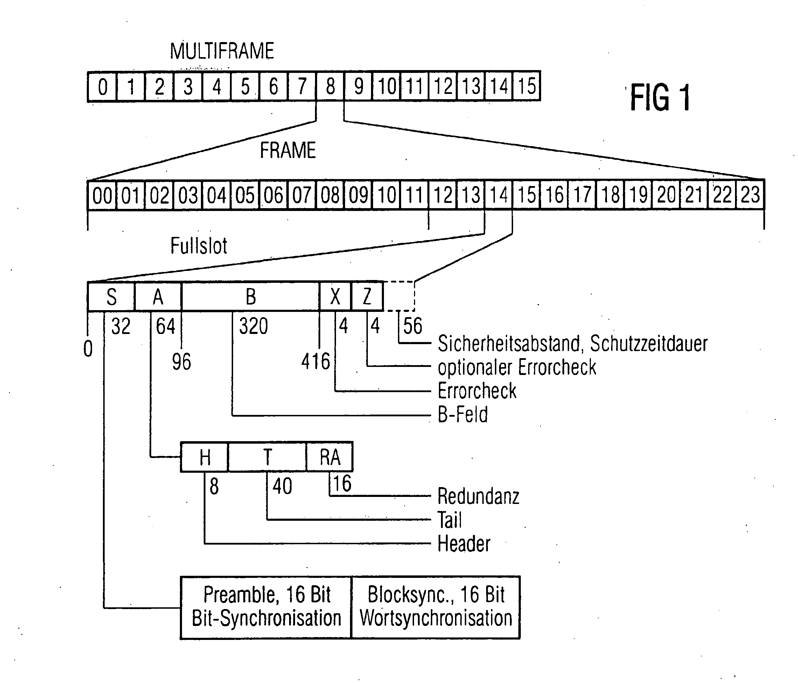

Die DECT-Rahmenstruktur ist in Figur 1 gezeigt. Ein Multiframe beinhaltet 16 Frames, die von 0 bis 15 durchnumeriert sind. Ein Frame, auch Rahmen genannt, hat eine Rahmenzeitdauer von 10 ms, was 11520 Bits entspricht. Der Frame ist in 2 x 12 gleich große Full-Slots, im folgenden auch als Slots oder Zeitschlitze bezeichnet, aufgeteilt. Diese sind in Figur 1 mit 00, 01, 02, ... 23 bezeichnet.

Jeder Zeitschlitz hat eine Zeitdauer von 416 ms, was 480 Bits entspricht. Ein Zeitschlitz ist aufgeteilt in ein 32 Bit breites Synchronisationsfeld S, nachfolgend auch Sync-Feld genannt, ein 64 Bit breites A-Feld, das zur Signalisierung dient, ein 320 Bit breites B-Feld, das die Sprachdaten enthält, ein 4 Bit breites X-Feld, ein 4 Bit breites Z-Feld und ein etwa 50 µs (entspricht 56 Bit) andauerndes Sicherheitsfeld, das auch als Gard-Space oder Schutzzeitdauer bezeichnet wird.

Das X-Feld dient der Fehlerüberprüfung (Errorcheck) über 84 Bits im B-Feld, wenn das B-Feld ungeschützt ist. Das Z-Feld ist ein optionaler Errorcheck, erreicht durch eine Verdoppelung des X-Felds.

Das S-Feld ist unterteilt in 16 Bits zur Bit-Synchronisation und weiteren 16 Bit zur Wortsynchronisation.

Das A-Feld besteht aus einem Header H (8 Bit), einem Tail T (40 Bit) und der 16 Bit breiten Redundanz RA. Weitere Einzelheiten der DECT-Rahmenstruktur können im European Telecommunication-Standard EPS 300175-2 und EPS 300175-3 nachgelesen werden.

Um Verbindungen aufzubauen und aufrecht zu erhalten, ist es notwendig die jeweiligen Sende-/Empfangsvorrichtungen zu synchronisieren. Kann eine Synchronisatoin nicht erreicht werden, kommt es zu einer Verbindungsunterbrechung. Auch eine Synchronisation zu einer falschen Sende-/Empfangseinheit ist nicht akzeptabel.

Aus der EP 0 788 255 A2 ist ein Verfahren zum Synchronisieren von Sende-/Empfangsvorrichtungen bei DECT bekannt. Das bekannte DECT-System enthält einen oder mehrere Basisstationen, die hier als Radio Fixed Parts (RFPs) bezeichnet werden. Jeder RFP versorgt eine Zelle des DECT-Netzes und ist mit einem Fixed Part (FP) verbunden, das wiederum mit einem drahtgebundenen Standard-Telefonsystem verbunden ist. Ein Mobilteil kommuniziert insofern mit einem der RFPs als Basisstation. Der Mobilteil hat einen internen Takt, der anpassbar ist. Dieses Anpassen des Takts erfolgt, um eine Synchronisation der Schlitze mit einem eingehenden burst zu erhalten. Der Mobilteil wird somit mit dem RFP schlitz-synchronisiert. Das A-Feld hat ein eigenes Fehlererkennungsunterfeld, das als Cyclic Redundancy Check, CRC, bezeichnet wird. Dabei entsprechen die letzten 16 bits des A-Felds diesem CRC. Mit den bits des CRC wird eine Fehlerüberprüfung der vorhergehenden 48 bits des A-Felds durchgeführt. Das Anpassen des Takts des Mobilteils kann dann erfolgen, wenn ein A-Feld empfangen und die Fehlerprüfung durchgeführt wurde. Wenn dabei keine Fehler festgestellt wurden, dann wird der interne Takt des Mobilteils angepasst. Wird ein Fehler festgestellt, dann wird der interne Takt nicht angepasst.

Die Aufgabe der Erfindung ist es, ein Verfahren anzugeben, durch das eine verbesserte Synchronisation zwischen den Sende-/Empfangsvorrichtungen erreicht werden kann.

Die Aufgabe wird durch ein Verfahren gemäß dem Patentanspruch 1 gelöst.

Vorteilhafte Weiterbildungen ergeben sich aus den abhängigen Ansprüchen.

Vorteilhafterweise wird durch die Erfindung der Betrieb zwischen den Sende-/Empfangsvorrichtungen bezüglich der Störanfälligkeit reduziert. Eine falsche Synchronisation zwischen den Sende-/Empfangsvorrichtungen, beispielsweise zwischen einer Basisstation und einem Repeater würde dazu führen, daß die Verbindung zu den Mobilteilen unterbrochen oder gar beendet werden würde. Dies kann für den Betreiber der Repeater sowohl finanzielle als auch Imageverluste mit sich bringen, was durch die Erfindung jedoch vermieden wird.

Bei dem erfindungsgemäßen Verfahren zur Synchronisation von Sende-/Empfangsvorrichtungen wird eine im empfangenen A-Feld eingetragene Prüfsumme mit einer aus dem Header und dem Tail des empfangenen A-Felds bestimmten Prüfsumme verglichen. Ein Synchronisationssignal wird erzeugt und einer Takterzeugungseinheit zugeführt, wenn die beiden Prüfsummen gleich sind. Die Takterzeugungseinheit ist Bestandteil der das A-Feld empfangenen Sende-/Empfangsvorrichtung. Das von der Takterzeugungseinheit erzeugte Taktsignal wird abhängig vom Synchronisationssignal eingestellt.

**Die Sende-/Empfangsvorrichtungen weisen dabei einen Repeater und eine Basisstation auf. Zur Synchronisation werden ferner sämtliche Verbindungen herangezogen, die zwischen den Sende-/Empfangsvorrichtungen bestehen.**

Im Fall, daß mehrere Sende-/Empfangsvorrichtungen in einem räumlich begrenzten Gebiet gleichzeitig betrieben werden, ist es notwendig, daß die jeweilige Sende-/Empfangsvorrichtung darüber informiert ist, woher die empfangenen Daten stammen. Durch die Lösung gemäß Patentanspruch 2 wird vermieden, daß fälschlicherweise Daten weiter verarbeitet werden, die von einer Sende-Empfangsvorrichtung stammen, mit welcher keine Verbindung gewünscht ist. Bei dem Verfahren zur Synchronisation zweier Sende/Empfangsvorrichtungen wird dabei eine empfangene Identifikationsnummer, welche eine Information über die Herkunft der empfangenen Daten beinhaltet, mit einer erwarteten Identifikationsnummer verglichen. Durch dieses Verfahren wird somit sichergestellt, daß die Synchronisation der Sende-/Empfangsvorrichtung immer mit der gewünschten Sende-/Empfangsvorrichtung erfolgt.

Dadurch, daß sowohl Prüfsumme als auch Identifikationsnummer zur Synchronisation herangezogen werden, kann die Synchronisation weiter verbessert werden.

Es besteht die Möglichkeit als Sende-/Empfangsvorrichtungen einen Repeater und einen Mobilteil einzusetzen. Weiterhin besteht die Möglichkeit als Sende-/Empfangsvorrichtungen eine Basisstation und ein Mobilteil zu verwenden. Selbstverständlich ist das Verfahren auch auf eine Basisstation in Verbindung mit mehreren Mobilteilen anwendbar.

Die Erfindung wird im folgenden anhand von zwei Figuren weiter erläutert.
- Figur 1: zeigt die Rahmenstruktur bei DECT.
- Figur 2: zeigt die Einbindung eines Repeaters in ein Kommunikationssystem.

Die DECT-Rahmenstruktur ist in Figur 1 gezeigt. Hierauf wurde bereits eingegangen.

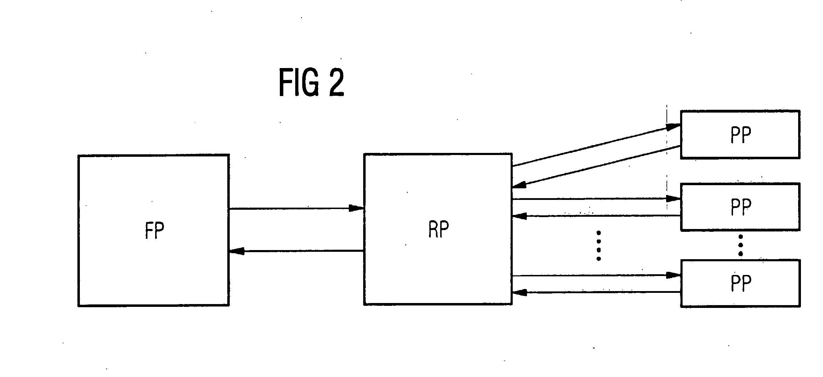

In Figur 2 ist das Kommunikationsprinzip zwischen Basisstation FP, Repeater RP und den Mobilteilen PP gezeigt. Die Mobilteile PP senden Signale zum Repeater RP, und empfangen Signale vom Repeater RP. Der Repeater RP wiederum sendet Signale zur Basisstation FP und empfängt Signale von dieser.

Die Basisstation FP, auch als Fixpart bezeichnet, sendet an einen Repeater RP, der wiederum an die Mobilteile PP, auch als Handgerät oder Portable Parts bezeichnet, sendet. Umgekehrt senden die Portable Parts PP an den Repeater RP, der wiederum zur Basisstation FP sendet.

Ein Repeater RP weist im Sinne von Basis- und Mobilstationfunktionalität die Möglichkeit auf, in allen 24 Zeitschlitzen eines Rahmens sowohl empfangen als auch senden zu können. D. h. auf einen Empfangszeitschlitz kann unmittelbar darauf ein Sendezeitschlitz folgen, dem wiederum ein Empfangszeitschlitz folgen kann. Da der Repeater RP sowohl die Basisstationsfunktionalität als auch die Mobilteilsfunktionalität gewährleisten muß, muß der zeitlich richtige Ablauf der Zeitschlitze sichergestellt sein. Deshalb ist es wichtig, daß die Synchronisation zwischen Repeater RP und Basisstation FP sowie Repeater RP und Mobilteil PP fehlerfrei gewährleistet sind.

Für den Fall, daß Verbindungen zwischen der Basisstation FP und den Mobilteilen PP ohne Zwischenschaltung eines Repeaters RP existieren, in den Figuren nicht gezeigt, muß eine fehlerfreie Synchronisation zwischen Basisstation FP und Mobilteilen PP gewährleistet sein. Es ist vorgesehen, daß eine im vom Repeater RP empfangenen A-Feld eingetragene Prüfsumme mit einer aus dem Header und dem Tail des von dem Repeater RP empfangenen A-Felds bestimmten Prüfsumme verglichen wird. Sind die beiden Prüfsummen gleich, so wird ein Synchronisationssignal erzeugt, welches einer Takterzeugungseinheit, die Bestandteil des Repeaters RP ist, zugeführt wird. Das von der Takterzeugungseinheit erzeugte Taktsignal wird abhängig vom Synchronisationssignal eingestellt.

Falls mehrere Basisstationen FP im Empfangsbereich des Repeaters RP betrieben werden, ist es für die Synchronisation notwendig, daß der Repeater RP Störungen, verursacht durch die anderen Basisstationen, herausfiltern kann. Dies wird dadurch erreicht, daß im Repeater RP eine von der Basisstation FP ausgesendete Identifikationsnummer, welche Information über die Herkunft der Daten, also über die sendende Basisstation beinhaltet, mit einer erwarteten Identifikationsnummer verglichen, und wenn diese beiden Identifikationsnummern gleich sind, ein Synchronisationssignal erzeugt wird. Nur wenn die beiden Identifikationsnummern gleich sind, kann davon ausgegangen werden, daß es sich um empfangene Daten handelt, die von der gewünschten Basisstation stammen. Das Synchronisationssignal wird einer Takterzeugungseinheit zugeführt, welche Bestandteil des Repeaters RP ist. Das von der Takterzeugungseinheit erzeugte Taktsignal wird abhängig vom Synchronisationssignal eingestellt.

Die empfangende Einheit erkennt, wenn im Header H die Systeminformation NT eingetragen ist, daß es sich bei der im Tail T angegebenen Information um die Identifikationsnummer handelt.

Ebenso kann die Synchronisation zwischen Repeater RP und Mobilteilen PP, oder für den Fall, daß Verbindungen direkt zwischen der Basisstation FP und den Mobilteilen PP existieren, realisiert werden.

Die Einstellung des Taktsignals abhängig vom Synchronisationssignal kann beispielsweise wie folgt erfolgen. Zum Zeitpunkt des Erkennens des Synchronisationsworts wird ein Timer des Repeaters RP auf einen Nennwert gesetzt, der sich aus der Laufzeit des Signals und einem Wert zusammensetzt, welcher das Ende des S-Felds oder des A-Felds kennzeichnet.

Um die Synchronisation zwischen Basisstation FP und Repeater RP weiter zu verbessern, können sämtliche S- und A-Felder der zwischen der Basisstation FP und dem Repeater RP aufgebauten Verbindungen zur Synchronisation des Repeaters RP mit der Basisstation FP herangezogen werden. Die Stabilität der Synchronisation steigt mit der Anzahl der Verbindungen zwischen der Basistation FP und dem Repeater RP. Dies hat den Vorteil, daß bei vielen Verbindungen die Wahrscheinlichkeit für eine Fehlsynchronisation des Repeaters RP verringert wird und damit die Anzahl der Verbindungsunterbrechungen oder gar Abbrüche zwischen dem Repeater RP und den Mobilteilen PP verringert wird.

## Patentansprüche

1. Verfahren zur Synchronisation von Sende-/Empfangsvorrichtungen bei DECT,
bei dem eine im empfangenen A-Feld eingetragene Prüfsumme mit einer aus dem Header und dem Tail des empfangenen A-Felds bestimmten Prüfsumme verglichen wird,
bei dem ein Synchronisationssignal erzeugt wird, wenn die beiden Prüfsummen gleich sind,
bei dem das Synchronisationssignal einer Takterzeugungseinheit zugeführt wird, welche Bestandteil der das A-Feld empfangenden Sende-/Empfangsvorrichtung ist,
bei dem das von der Takterzeugungseinheit erzeugte Taktsignal abhängig vom Synchronisationssignal eingestellt wird,
bei dem die Sende-/Empfangsvorrichtungen einen Repeater und eine Basistation aufweisen und
bei dem sämtliche Verbindungen, die zwischen den Sende-/Empfangsvorrichtungen bestehen, zur Synchronisation herangezogen werden.

2. Verfahren nach Anspruch 1,
bei dem eine empfangene Identifikationsnummer, welche eine Information über die Herkunft der empfangenen Daten beinhaltet, mit einer erwarteten Identifikationsnummer verglichen wird.

3. Verfahren nach Anspruch 2,
bei dem das Synchronisationssignal erzeugt wird, wenn die beiden Prüfsummen und die beiden Identifikationsnummern gleich sind.

4. Verfahren nach einem der Ansprüche 1 bis 3,
bei dem die Sende-/Empfangsvorrichtungen einen Repeater und ein Mobilteil aufweisen.

5. Verfahren nach einem der Ansprüche 1 bis 3,
bei dem die Sende-/Empfangsvorrichtungen eine Basistation und ein Mobilteil aufweisen.

## Claims

1. Method for the synchronization of transmitting/receiving devices in DECT,
in which a checksum entered in the received A-field is compared with a checksum determined from the header and the tail of the received A-field,
in which a synchronization signal is generated if the two checksums are identical,
in which the synchronization signal is fed to a clock generating unit that is part of the transmitting/receiving device that receives the A-field,
in which the clock signal generated by the clock generating unit is set depending on the synchronization signal,
in which the transmitting/receiving devices have a repeater and a base station, and
in which all connections existing between the transmitting/receiving devices are used for synchronization.

2. Method according to Claim 1,
in which a received identification number comprising an item of information about the origin of the received data is compared with an expected identification number.

3. Method according to Claim 2,
in which the synchronization signal is generated if the two checksums and the two identification numbers are identical.

4. Method according to one of Claims 1 to 3,
in which the transmitting/receiving devices have a repeater and a mobile part.

5. Method according to one of Claims 1 to 3,
in which the transmitting/receiving devices have a base station and a mobile part.

## Revendications

1. Procédé de synchronisation d'appareils
émetteurs / récepteurs selon la norme DECT,
dans lequel une somme de contrôle enregistrée dans le champ A reçu est comparée à une somme de contrôle déterminée à partir de l'en-tête et de la queue du champ A reçu,
dans lequel un signal de synchronisation est produit lorsque les deux sommes de contrôle sont égales,
dans lequel le signal de synchronisation est envoyé à une unité de production d'horloge qui fait partie de l'appareil émetteur / récepteur recevant le champ A,
dans lequel le signal d'horloge produit par l'unité de production d'horloge est réglé en fonction du signal de synchronisation,
dans lequel les appareils émetteurs / récepteurs comportent un répéteur et une station de base, et
dans lequel on exploite pour la synchronisation toutes les liaisons qui existent entre les appareils
émetteurs / récepteurs.

2. Procédé selon la revendication 1,
dans lequel un numéro d'identification reçu, qui contient une information sur la provenance des données reçues, est comparé à un numéro d'identification attendu.

3. Procédé selon la revendication 2,
dans lequel le signal de synchronisation est produit lorsque les deux sommes de contrôle sont égales et les deux numéros d'identification sont égaux.

4. Procédé selon l'une des revendications 1 à 3,
dans lequel les appareils émetteurs / récepteurs comportent un répéteur et une partie mobile.

5. Procédé selon l'une des revendications 1 à 3,
dans lequel les appareils émetteurs / récepteurs comportent une station de base et une partie mobile.
